Europäisches Patentamt

European Patent Office

Office européen des brevets

(19)

(11) Numéro de publication : **0 100 515**
**B1**

(12) **FASCICULE DE BREVET EUROPÉEN**

(45) Date de publication du fascicule du brevet :
12.11.86

(51) Int. Cl.⁴ : **H 01 M 4/36**, H 01 M 6/50

(21) Numéro de dépôt : 83107329.1

(22) Date de dépôt : 26.07.83

(54) **Pile au lithium-bioxyde de manganèse.**

(30) Priorité : 30.07.82 FR 8213324

(43) Date de publication de la demande :
15.02.84 Bulletin 84/07

(45) Mention de la délivrance du brevet :
12.11.86 Bulletin 86/46

(84) Etats contractants désignés :
AT BE CH DE FR GB IT LI LU NL SE

(56) Documents cités :
EP-A- 0 014 931
DE-A- 2 937 285

(73) Titulaire : **Société Anonyme dite SAFT**
**156, avenue de Metz**
**F-93230 Romainville (FR)**

(72) Inventeur : **Broussely, Michel**
**53, avenue de Poitiers**
**F-86240 Liguge (FR)**

(74) Mandataire : **Weinmiller, Jürgen et al**
**Lennéstrasse 9**
**D-8133 Feldafing (DE)**

EP 0 100 515 B1

## Description

La présente invention concerne une pile au lithium-bioxyde de manganèse dont la matière active positive comporte un corps susceptible de conférer à la pile un second palier de décharge, et dont l'électrolyte comporte un sel de lithium dissous dans un solvant choisi parmi des esters, des éthers et leurs mélanges. Une telle pile présente le gros intérêt de délivrer une tension de décharge élevée, de l'ordre de 2,8 volts à 3 volts en régime de décharge lent, et trouve de nombreuses applications notamment dans le domaine de l'informatique pour la sauvegarde des mémoires.

On connaît par le document DE-A-2 937 285 une pile au lithium dont l'électrode positive peut comprendre un mélange de bioxyde de manganèse et d'un sel d'oxoacide, capable de conférer à la pile un second palier de décharge pour la détection de l'approche de la fin de la pile.

En outre, le document EP-A-0 014 931 décrit l'utilisation d'oxyphosphate de cuivre comme matière active positive d'une pile au lithium.

Le but de la présente invention est de pouvoir détecter l'approche de la fin de vie de la pile et de manière telle qu'il soit possible de remplacer la pile dans de bonnes conditions, sans interruption de fonctionnement du système qui l'utilise.

Ce but est atteint par une pile au lithium-bioxyde de manganèse telle que spécifiée ci-dessus, qui est caractérisée par le fait que ledit corps mélangé au bioxyde de manganèse est de l'oxyphosphate de cuivre, la proportion en poids d'oxyphosphate de cuivre par rapport au mélange étant déterminée par la capacité voulue pour le second palier de décharge par rapport à la capacité totale de la pile.

L'on obtient ainsi, après la décharge du bioxyde de manganèse vers 3 volts, la décharge de l'oxyphosphate de cuivre à une tension sensiblement plus basse, mais supérieure à 2 volts, au moins à un régime de décharge lent.

L'oxyphosphate de cuivre est tout à fait compatible avec le bioxyde de manganèse et il est aisé de réaliser leur mélange car leurs densités sont voisines ; en outre l'oxyphosphate de cuivre est stable dans les électrolytes organiques de la pile Li-MnO$_2$. A titre d'exemple, l'ester est choisi parmi le carbonate de propylène, le carbonate d'éthylène ou équivalent ; l'éther est choisi parmi les glymes, le dioxolanne ou équivalent. Le sel de lithium est choisi parmi LiClO$_4$, LiBF$_4$, LiCF$_3$SO$_3$, LiAsF$_6$...

L'invention sera décrite ci-après plus en détail à l'aide d'un mode de réalisation.

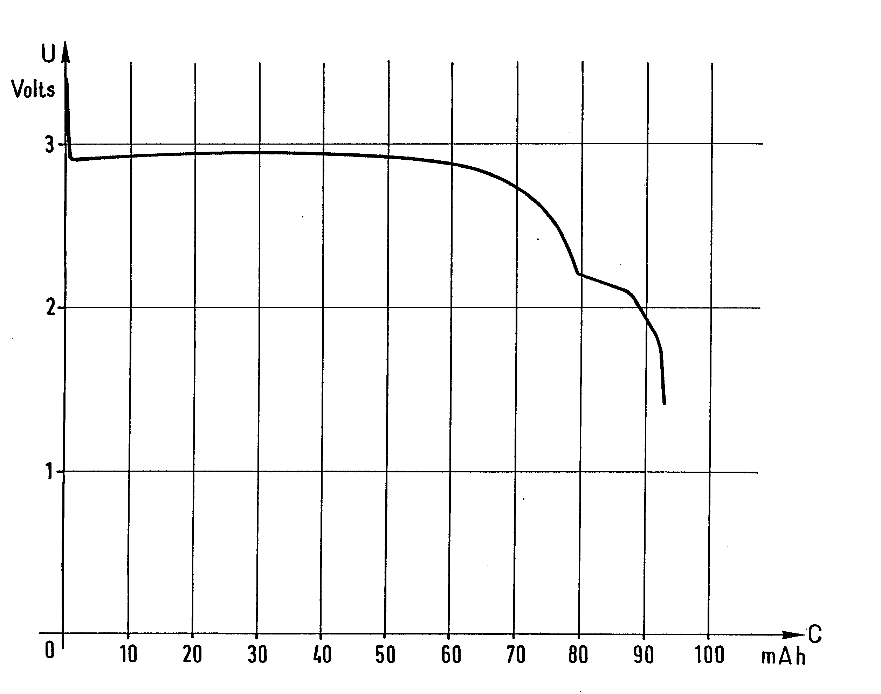

La figure unique annexée montre la décharge d'une telle pile : tension U (en volts) en fonction de la capacité C (en mAh).

On a réalisé une pile selon l'invention de la manière suivante :

— Electrode positive :

| | |
|---|---|
| Bioxyde de manganèse | 278 mg |
| Oxyphosphate de cuivre | 32 mg |
| Liant PTFE | 14 mg |
| Conducteur électronique graphite | 32 mg |

Cet ensemble est comprimé sous forme d'une pastille de 16,7 mm de diamètre et de 0,75 mm de hauteur.

— Electrode négative : lithium : 25,5 mg

— Electrolyte : une solution 1 M de perchlorate de lithium dans un mélange de carbonate de propylène et de diméthoxyéthane (proportions en volume 50 %-50 %).

L'ensemble de ces constituants est monté dans une pile bouton classique de 20 mm de diamètre et de 2 mm de haut.

La pile ainsi réalisée est déchargée à 20 °C sur une résistance constante de 30 KΩ.

On constate (voir figure annexée) que, dans cet exemple, la capacité du second palier représente environ 10 % de la capacité totale, ce qui constitue une valeur tout à fait appropriée pour permettre un remplacement aisé de la pile dans de bonnes conditions.

Bien entendu, l'invention n'est pas limitée à ce mode de réalisation. On pourra modifier les proportions d'oxyphosphate de cuivre selon la durée souhaitée pour le second palier.

Il faut remarquer toutefois que, bien que la capacité théorique de l'oxyphosphate de cuivre soit de 466 mAh/g, les deux tiers seulement de cette capacité sont utilisables à une tension supérieure à 2 volts.

La capacité massique à prendre en compte est donc 310 mAh/g, capacité très proche de celle du bioxyde de manganèse (308 mAh/g).

On peut donc assimiler approximativement les valeurs relatives en poids et en capacité.

## Revendications

1. Pile au lithium-bioxyde de manganèse dont la matière active positive comporte un corps susceptible de conférer à la pile un second palier de décharge, et dont l'électrolyte comporte un sel de lithium dissous dans un solvant choisi parmi des esters, des éthers et leurs mélanges, caractérisée par le fait que ledit corps mélangé au bioxyde de manganèse est de l'oxyphosphate de cuivre, la proportion en poids d'oxyphosphate de cuivre par rapport au mélange étant déterminée par la capacité voulue pour le second palier de décharge par rapport à la capacité totale de la pile.

2. Pile au lithium selon la revendication 1, caractérisée par le fait que la proportion en poids d'oxyphosphate de cuivre est de l'ordre de 10 % du poids total du mélange de matière active positive.

3. Pile au lithium selon l'une des revendications 1 et 2, caractérisée par le fait que ledit ester est choisi parmi le carbonate de propylène et le carbonate d'éthylène.

4. Pile au lithium selon l'une des revendications 1 et 2, caractérisée par le fait que ledit éther est choisi parmi les glymes et le dioxolanne.

5. Pile selon l'une des revendications précédentes, caractérisée par le fait que ledit sel de lithium est choisi parmi LiClO$_4$, LiBF$_4$, LiCF$_3$SO$_3$, LiAsF$_6$.

### Claims

1. A lithium-manganese dioxide cell, the active positive material of which comprises a body which is apt to confer a second discharge level to the cell, and the electrolyte of which comprises a lithium salt dissolved in a solvent chosen from the esters, ethers and their mixtures, characterized in that said body mixed with the manganese bioxide is copper oxyphosphate, the weight proportion of the copper oxyphosphate in the mixture being determined by the capacity required for the second discharge level with respect to the total capacity of the cell.

2. A lithium cell according to claim 1, characterized in that the proportion of copper oxyphosphate is about 10 % of the total weight of the positive active material.

3. A lithium cell according to one of claims 1 and 2, characterized in that said ester is chosen from propylene carbonate and ethylene carbonate.

4. A lithium cell according to one of claims 1 and 2, characterized in that said ether is chosen from the glymes and the dioxolane.

5. A cell according to one of the preceding claims, characterized in that said lithium salt is chosen from LiClO$_4$, LiBF$_4$, LiCF$_3$SO$_3$, and LiAsF$_6$.

### Patentansprüche

1. Lithium-Mangandioxid Zelle, deren aktives positives Material einen Stoff aufweist, der der Zelle eine zweite Entladungsstufe zu verleihen vermag und deren Elektrolyt ein in einem aus den Estern, Äthern und ihren Mischungen ausgewählten Lösungsmittel gelöstes Lithiumsalz aufweist, dadurch gekennzeichnet, daß der dem Mangandioxid beigemischte Stoff Kupferoxyphosphat ist, wobei der Gewichtsanteil des Kupferoxyphosphats in der Mischung durch die für die zweite Entladungsstufe in bezug auf die Gesamtkapazität der Zelle gewünschte Kapazität bestimmt wird.

2. Lithiumzelle nach Anspruch 1, dadurch gekennzeichnet, daß der Gewichtsanteil des Kupferoxyphosphats in der Größenordnung von 10 % des Gesamtgewichts der Mischung des aktiven positiven Materials liegt.

3. Lithiumzelle nach einem der Ansprüche 1 und 2, dadurch gekennzeichnet, daß der Ester aus dem Propylencarbonat und dem Ethylencarbonat ausgewählt wird.

4. Lithiumzelle nach einem der Ansprüche 1 und 2, dadurch gekennzeichnet, daß der Äther aus den Glymen und dem Dioxolan ausgewählt wird.

5. Zelle nach einem der vorhergehenden Ansprüche dadurch gekennzeichnet, daß das Lithiumsalz aus LiClO$_4$, LiBF$_4$, LiCF$_3$SO$_3$, LiAsF$_6$ ausgewählt wird.

U Volts

3

2

1

0 10 20 30 40 50 60 70 80 90 100 mAh C